# EUROPÄISCHE PATENTSCHRIFT

(11) **EP 4 288 677 B1**
(45) Veröffentlichungstag und Bekanntmachung des Hinweises auf die Patenterteilung: **05.03.2025**
(21) Anmeldenummer: 22700536.0
(22) Anmeldetag: 13.01.2022
(51) Int. Cl.: F16H 21/40, E05B 81/14, E05B 81/30

(54) **ELEKTROMOTORISCHER ANTRIEB FÜR KRAFTFAHRZEUG-TECHNISCHE ANWENDUNGEN**
ELECTROMOTIVE DRIVE FOR MOTOR VEHICLE APPLICATIONS
ENTRAÎNEMENT ÉLECTROMOTEUR POUR DES APPLICATIONS DE VÉHICULE MOTORISÉ

(30) Priorität: 04.02.2021 DE 102021102559
(43) Veröffentlichungstag der Anmeldung: 13.12.2023
(73) Patentinhaber: Kiekert Aktiengesellschaft, 42579 Heiligenhaus (DE)
(72) Erfinder: SZEGENY, Peter, 51766 Engelskirchen (DE); INAN, Ömer, 46282 Dorsten (DE); SCHIFFER, Holger, 40668 Meerbusch (DE); SCHOLZ, Michael, 45136 Essen (DE); REUSCH, Manuel, 40589 Düsseldorf (DE)
(74) Vertreter: Kiekert AG Patentabteilung
(86) Internationale Anmeldenummer: PCT/DE2022/100021
(87) Internationale Veröffentlichungsnummer: WO 2022/167027

(56) Entgegenhaltungen:
- EP-A1- 0 967 350
- EP-A1- 1 074 681
- DE-A1- 10 208 722
- DE-A1- 3 319 354
- US-B2- 6 773 042

## Beschreibung

Die Erfindung betrifft einen elektromotorischen Antrieb für kraftfahrzeug-technische Anwendungen, mit einem Elektromotor, ferner mit einem mit dem Elektromotor wechselwirkenden Antriebsrad, insbesondere Schneckenrad, mit Nockenkontur, und mit einem von der Nockenkontur beaufschlagbaren Hebel, wobei die Nockenkontur zur Beaufschlagung des Hebels eine volle Umdrehung (360°) vollführt.

Elektromotorische Antriebe für kraftfahrzeug-technische Anwendungen zeichnen sich durch einen robusten Aufbau und die Möglichkeit des Betriebs mit einer Niederspannung von typischerweise 12 V oder 24 V Gleichspannung aus. Dadurch sind oftmals spezielle Maßnahmen zur Übersetzung der Drehbewegung des Elektromotors erforderlich, um auch kraftraubende Betätigungen zu realisieren. Solche Übersetzungen werden im Regelfall dadurch zur Verfügung gestellt, dass der Elektromotor mit einer auf seiner Abtriebswelle befindlichen Schnecke mit einer äußeren Verzahnung des Schneckenrades kämmt. Außerdem verfügt die Nockenkontur typischerweise über eine Spiralkante, um den hieran anliegenden und mithilfe der Spiralkante der Nockenkontur beaufschlagbaren Hebel mit zunehmendem Drehmoment beaufschlagen zu können.

Das hat sich grundsätzlich bewährt, weshalb solche elektromotorischen Antriebe beispielsweise zur Steuerung eines Verschlusses eingesetzt werden, wie dies die gattungsbildende DE 197 02 420 C5 beschreibt. Tatsächlich lassen sich mit dem auf diese Weise realisierten Stellelement bzw. dem Stellantrieb die Funktionsstellungen "offen", "verriegelt", "Diebstahlsicherung" und schließlich "Kindersicherung" realisieren, die zu Drehbewegungen des Schneckenrades von 0° bzw. 360°, 90°, 180° und schließlich 270° korrespondieren. Das hat sich grundsätzlich bewährt.

Das DE3319354A1 stellt den nächstliegenden Stand der Technik dar.

Daneben kommen vergleichbare elektromotorische Antriebe neuerdings auch in Verbindung mit der Beaufschlagung von Verriegelungsaktuatoren bei Ladevorrichtungen im Zusammenhang mit Elektro- oder Hybrid-Kraftfahrzeugen zum Einsatz. Andere Anwendungsfälle solcher elektromotorischen Antriebe können darin liegen, für eine Hebe- und Senkbewegung einer Fensterscheibe, eine Spiegelverstellung oder auch eine Sitzverstellung zu sorgen. Auch Deckelent-/verriegelungen sind hiermit umsetzbar. Daneben kommen solche elektromotorischen Antriebe im Innern von Kraftfahrzeug-Schlössern oder auch als Zuzieh-/Öffnungsantrieb zum Einsatz. Immer sind diese Antriebe durch einen schnelllaufenden Elektromotor gekennzeichnet, dessen hohe Umdrehungszahl in eine relativ langsame Bewegung mit demgegenüber gesteigerter Kraft bzw. erhöhtem Drehmoment und folglich großer Übersetzung umgewandelt wird.

Zwar kann man in diesem Zusammenhang zwischengeschaltete Getriebe vorsehen. Diese erhöhen jedoch den technologischen Aufwand und die Reibung, werden folglich in der Regel vermieden und nicht als zielführend betrachtet. Gleichwohl gibt es nach wie vor und unverändert Bestrebungen, die schon bisher zur Verfügung gestellte Übersetzung erhöhen zu wollen. Dazu stehen momentan keine konstruktiv einfachen und kostengünstigen Lösungen zur Verfügung. Hier will die Erfindung insgesamt Abhilfe schaffen.

Der Erfindung liegt das technische Problem zugrunde, einen derartigen elektromotorischen Antrieb für kraftfahrzeug-technische Anwendungen so weiter zu entwickeln, dass eine Erhöhung der Übersetzung bei zugleich konstruktiv einfachem und kostengünstigem Aufbau zur Verfügung gestellt wird. Zur Lösung dieser technischen Problemstellung schlägt die Erfindung bei einem gattungsgemäßen elektromotorischen Antrieb für kraftfahrzeug-technische Anwendungen vor, dass die Nockenkontur zur Realisierung einer mehr als vollen Umdrehung (> 360°) eingerichtet ist.

Damit es in diesem Zusammenhang nicht zu etwaigen Kollisionen mit einem ortsfesten Anschlag kommt, ist die Nockenkontur mit einem flexiblen Anschlag ausgerüstet. Bei dem Anschlag handelt es sich um ein mit dem Antriebsrad, insbesondere Schneckenrad, wechselwirkendes Spannmittel. Vorteilhafterweise ist das Antriebsrad als Schneckenrad ausgebildet. Es ist des Weiteren denkbar, dass das Antriebsrad als Zahnrad oder Ähnliches ausgebildet ist.

Die Erfindung geht zunächst einmal von der Erkenntnis aus, dass die Realisierung einer mehr als vollen Umdrehung seitens der Nockenkontur dazu genutzt bzw. eingesetzt werden kann, dass mithilfe der Nockenkontur eine im Vergleich zum Stand der Technik nochmals erhöhte Übersetzung auf den Hebel übertragen werden kann. Dadurch ist der Hebel in der Lage, mit einem im Vergleich zum Stand der Technik gesteigerten Drehmoment die gewünschten Stellbewegungen auszuführen. Hierbei kann es sich um die Darstellung von Funktionszuständen im Innern eines Kraftfahrzeug-Schlosses, eine Zuzieh-oder Öffnungsbewegung an einer Kraftfahrzeugtür, das Heben oder Senken einer Kraftfahrzeugscheibe etc. handeln, um nur einige Anwendungsbeispiele zu nennen.

Damit der elektromotorische Antrieb gleichwohl nach Beendigung einer zugehörigen Stellbewegung abgebremst wird und gestoppt werden kann, ist der flexible Anschlag realisiert. D.h., etwaige "Nachlaufbewegungen" des Antriebes werden nicht beobachtet. Denn mithilfe eines solchen flexiblen Anschlages können die gewünschten Umdrehungen von mehr als 360° der Nockenkontur problemlos in die Praxis umgesetzt werden, und zwar ohne dass etwaige Kollisionen mit einem ortsfesten Anschlag zu befürchten sind. Vielmehr stellt der als mit dem Antriebsrad, insbesondere Schneckenrad, wechselwirkendes Spannmittel vorteilhaft ausgebildete Anschlag ein probates Mittel dar, die Nockenkontur und damit das Antriebsrad, insbesondere Schneckenrad, am Ende ihrer Stellbewegung oder auch am Anfang nach einer Reversierbewegung abbremsen zu können. Dieser Bremsvorgang ist aufgrund der Flexibilität des Spannmittels im Vergleich zu einem "harten Anschlag" auch als "weich" anzusehen, sodass eine solche Ausprägung mit dem zusätzlichen Vorteil verbunden ist, dass etwaige Beschädigungen des elektromotorischen Antriebes durch ein hartes Anschlagen vermieden werden.

Erfindungsgemäß ist das Spannmittel einerseits am Antriebsrad , insbesondere Schneckenrad, und andererseits an einem ortsfesten Anschlag festgelegt. Außerdem verfügt das Antriebsrad, insbesondere Schneckenrad, vorteilhaft über eine Führungskontur für das Spannmittel. Mithilfe der Führungskontur kann folglich das Spannmittel auf dem Antriebsrad, insbesondere dem Schneckenrad, gleichsam "aufgewickelt" werden. Damit es an dieser Stelle nicht zu Kollisionen mit der Nockenkontur kommt, ist die Auslegung darüber hinaus so getroffen, dass die Führungskontur gegenüberliegend zur Nockenkontur am Antriebsrad, insbesondere dem Schneckenrad, vorgesehen und angeordnet ist.

D. h., die Nockenkontur und der daran anliegende und mit ihr wechselwirkende Hebel zur Beaufschlagung des gewünschten Stellelementes findet sich auf einer Seite des Antriebsrades, insbesondere des Schneckenrades, beispielsweise auf seiner Oberseite oder Frontseite. Demgegenüber ist die Rückseite des Antriebsrades, insbesondere des Schneckenrades, typischerweise mit der Führungskontur ausgerüstet. Da das Spannmittel an das Antriebsrad, insbesondere an das Schneckenrad, mit einem Ende angeschlossen ist, und zwar in der Regel benachbart zur Führungskontur oder sogar an der Führungskontur, führt eine Drehbewegung des Antriebsrades, insbesondere Schneckenrades dazu, dass sich das Spannmittel um die Führungskontur herum an das Schneckenrad anlegt und hierdurch gleichsam auf dem Antriebsrad, insbesondere Schneckenrad aufgewickelt wird.

In diesem Zusammenhang hat es sich als besonders günstig erwiesen, wenn das Spannmittel bandförmig ausgebildet ist. Grundsätzlich kann es sich bei dem Spannmittel auch um eine Feder, beispielsweise eine Spiralfeder, handeln. In der Regel greift die Erfindung jedoch auf ein bandförmiges Spannmittel zurück, welches darüber hinaus und typischerweise eine flexible Längenänderung von mehr als 20 %, vorzugsweise von mehr als 50 %, zulässt. D. h., das bandförmige Spannmittel lässt sich in seiner Länge um mehr als 20 %, um mehr als 50 % bzw. um noch mehr längen oder dehnen, und zwar ohne dass an dieser Stelle Beschädigungen beobachtet werden.

Zu diesem Zweck ist das Spannmittel vorteilhaft ganz oder teilweise aus einem elastischen Material gefertigt. Hier haben sich beispielsweise elastische Kunststoffe wie Elastomere als besonders günstig erwiesen. Grundsätzlich kann das Spannmittel auch aus einem Textil hergestellt sein. Daneben sind zweifellos auch Kombinationen beispielsweise eines Elastomers mit einem Textil denkbar.

Die Nockenkontur verfügt in der Regel über eine vorzugsweise achsennahe Ausnehmung für den Hebel. D. h., die Ausnehmung findet sich nah oder benachbart zur Achse des Antriebsrades, insbesondere des Schneckenrades. Von dieser Ausnehmung geht im Allgemeinen eine Spiralkante oder Spiralkontur der Nockenkontur aus. Die Spiralkante bzw. Spiralkontur beschreibt dabei mehr als eine volle Umdrehung um die zuvor bereits angesprochene Achse des Antriebsrades, insbesondere des Schneckenrades.

Sofern die Nockenkontur in einer Ebene angeordnet ist, verfügt die Nockenkontur über die angesprochene Spiralkante in der besagten Ebene, welche mit zunehmendem Radialabstand auf den Hebel zur Beaufschlagung des Stellelementes arbeitet. Grundsätzlich kann an dieser Stelle aber auch eine Spiralkontur realisiert sein, die sich im Vergleich zur Achse des Antriebsrades/Schneckenrades wendelförmig erstreckt und auf diese Weise die mehr als volle Umdrehung um die Achse beschreibt. Die wendelförmige Gestalt der Spiralkontur impliziert, dass die Spiralkontur und mit ihr die Nockenkontur insgesamt raumförmig bzw. dreidimensional gestaltet ist. Auch in einem solchen Fall sorgt die wendelförmige Spiralkontur erneut dafür, dass der hiermit wechselwirkende Hebel von der Spiralkontur beaufschlagt wird, um die gewünschte Bewegung des Stellelementes zu initiieren.

Im Ergebnis wird ein elektromotorischer Antrieb für kraftfahrzeug-technische Anwendungen zur Verfügung gestellt, der aufgrund der Möglichkeit seiner Nockenkontur eine mehr als volle Umdrehung realisieren zu können, in der Lage ist, eine besonders hohe Übersetzung ausgehend vom Elektromotor über das Antriebsrad, insbesondere Schneckenrad, und die Nockenkontur auf den Hebel zur Beaufschlagung des gewünschten Stellelementes übertragen zu können. Beispielsweise mag der Hebel an eine Drehfalle mittelbar oder unmittelbar angeschlossen sein, um diese im Sinne einer Zuziehbewegung zu beaufschlagen und damit eine zugehörige Kraftfahrzeug-Tür zuzuziehen. Selbstverständlich sind auch andere Anwendungen denkbar, die einleitend bereits beschrieben wurden.

So ist zusätzlich Gegenstand der Erfindung ein Kraftfahrzeug-Schloss und insbesondere Kraftfahrzeug-Türschloss, welches mit einem solchen elektromotorischen Antrieb ausgerüstet ist. Der Antrieb kann dabei eingesetzt werden, um das fragliche Kraftfahrzeug-Schloss elektrisch öffnen zu können. Das gelingt mittelbar durch betätigen eines Auslösehebels oder unmittelbar, indem die Sperrklinke direkt beaufschlagt wird. Darüber hinaus können mit Hilfe des betreffenden Antriebes Schlossfunktionen wie eine Kindersicherung, eine Diebstahlsicherung, eine Zentralverriegelung etc. einzeln oder in Kombination eingelegt und realisiert werden.

Das Antriebsrad, insbesondere Schneckenrad, ist in der Regel als Spritzgussteil ausgeführt, sodass sich das Antriebsrad, insbesondere Schneckenrad, inklusive Nockenkontur besonders einfach und kostengünstig herstellen lässt. Hier haben sich Ausführungsformen aus Metall oder Kunststoff bewährt. In Verbindung mit dem als bandförmiges Spannmittel ausgebildeten flexiblen Anschlag wird folglich ein konstruktiv besonders einfacher Aufbau zur Verfügung gestellt und umgesetzt, der darüber hinaus nur geringe Herstellungskosten nach sich zieht. Hierin sind die wesentlichen Vorteile zu sehen.

Im Folgenden wird die Erfindung anhand einer lediglich ein Ausführungsbeispiel darstellenden Zeichnung näher erläutert, es zeigen:
Fig. 1A und 1B eine Frontansicht des erfindungsgemäßen elektromotorischen Antriebes in zwei unterschiedlichen Funktionsstellungen und
Fig. 2A bis 2C den elektromotorischen Antrieb nach den Fig. 1A und 1B in einer Rückansicht.

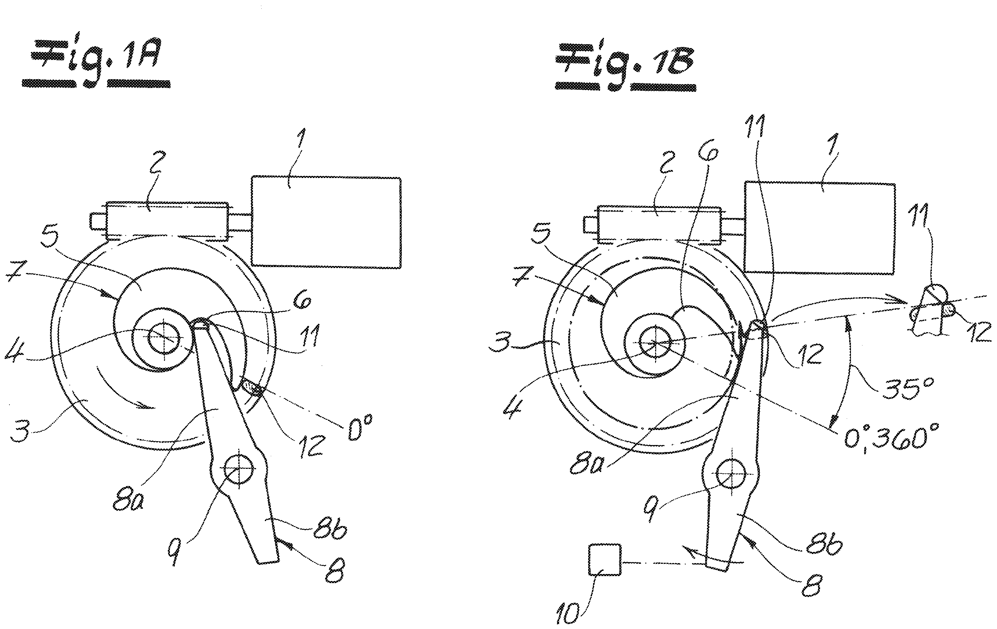

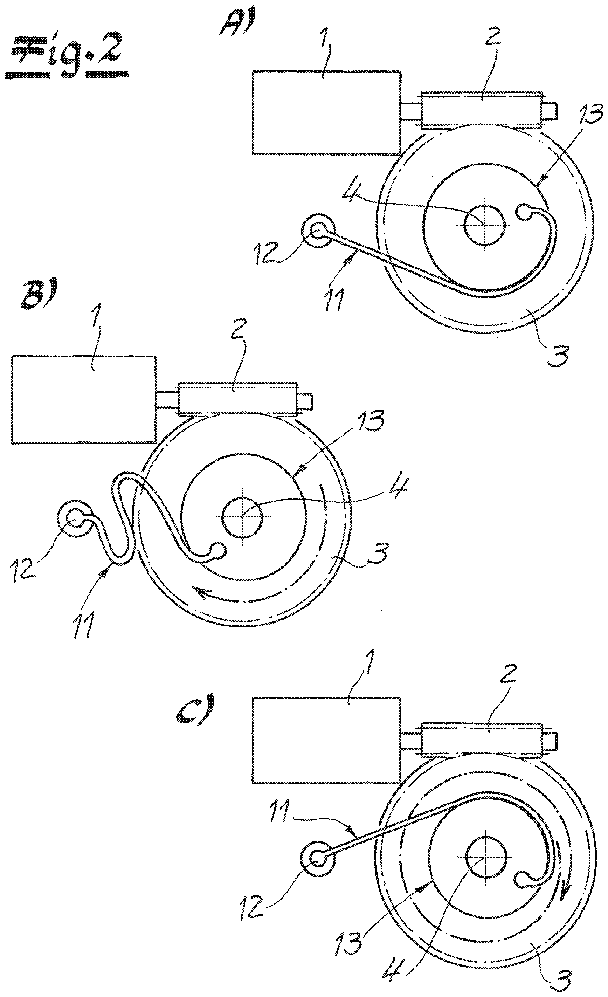

In den Figuren ist ein elektromotorischer Antrieb für kraftfahrzeug-technische Anwendungen dargestellt. Der fragliche Antrieb verfügt zu diesem Zweck über einen Elektromotor 1, der folgerichtig und typischerweise mit einer Nieder-Gleichspannung von beispielsweise 12 V, 24 V oder 48 V betrieben wird. Der Elektromotor 1 weist eine auf seiner Abtriebswelle angeordnete Abtriebsschnecke 2 auf, die mit einer außenseitigen Verzahnung eines Schneckenrades 3 kämmt. Dadurch kann das Schneckenrad 3 insbesondere in den Fig. 1A und 1B dargestellte Gegenuhrzeigersinnbewegungen um ihre Achse 4 vollführen. Die Gegenuhrzeigersinnbewegung in der Frontansicht nach den Fig. 1A und 1B korrespondiert zu einer Uhrzeigersinnbewegung in der Rückansicht nach den Fig. 2A bis 2C. Grundsätzlich sind natürlich auch Uhrzeigersinnbewegungen in der Frontansicht und entsprechend Gegenuhrzeigersinnbewegungen in der Rückansicht denkbar.

Das Schneckenrad 3 ist mit einer spiralförmigen Nockenkontur 5 ausgerüstet. Die Nockenkontur 5 verfügt über eine achsnahe Ausnehmung 6 einerseits und eine Spiralkante 7 andererseits. Die Spiralkante 7 geht dabei von der Ausnehmung 6 aus und zeichnet sich durch einen in der Betätigungsrichtung (im Gegenuhrzeigersinn in der Frontansicht nach den Fig. 1A und 1B) wachsenden Radius aus, sodass ein mithilfe der Nockenkontur 5 beaufschlagter Hebel 8 eine zunehmende Drehmomentbeaufschlagung erfährt. Tatsächlich handelt es sich bei dem Hebel 8 um einen Zweiarmhebel aus beispielsweise Kunststoff oder Metall, welcher um eine nach dem Ausführungsbeispiel mittlere Achse 9 drehbar in einem Gehäuse gelagert ist. Bei dem Gehäuse kann es sich um ein Gehäuse eines Kraftfahrzeug-Schlosses oder eines Zuziehantriebes, Fensterheberantriebes, Klappenantriebes etc. handeln.

Mithilfe des Hebels 8 wird nach dem Ausführungsbeispiel ein Stellelement 10 beaufschlagt. Bei dem Stellelement 10 kann es sich im Falle eines Zuziehantriebes um eine nicht ausdrücklich dargestellte Drehfalle des zuvor bereits angesprochenen Kraftfahrzeug-Türschlosses handeln. Grundsätzlich kann das Stellelement 10 aber auch eine heb- und absenkbare Fensterscheibe sein, eine Kraftfahrzeugtür, eine Kraftfahrzeugklappe etc. Zu diesem Zweck ist der Hebel 8 in der Lage, die in der Fig. 1B angedeutete Stellbewegung zu vollführen, welche nach dem Ausführungsbeispiel dazu korrespondiert, dass der Hebel 8 ausgehend von seiner Ausgangsstellung in der Fig. 1A im Uhrzeigersinn um seine Achse 9 verschwenkt wird, wie man dies beim Vergleich der Fig. 1A und 1B nachvollziehen kann.

Die erfindungsgemäße Besonderheit liegt nun darin, dass die Nockenkontur 5 zur Beaufschlagung des Hebels 8 nicht nur eine Bewegung im Sinne einer vollen Umdrehung um 360° vollführen kann, wie man dies bei einem Vergleich der Fig. 1A und 1B nachvollziehen kann. Tatsächlich ist in der Fig. 1A die Ausgangsstellung der Nockenkontur 5 entsprechend 0° dargestellt, wohingegen in der Fig. 1B die Endposition der Nockenkontur 5 wiedergegeben ist, welche zu einem Winkel von mehr als 360° korrespondiert. Tatsächlich wird im gezeigten Beispielfall ein Winkel von insgesamt nahezu 400° absolviert, nämlich 360° plus ca. 35°. Das gilt selbstverständlich nur beispielhaft und ist keinesfalls einschränkend.

D. h., die Nockenkontur 5 ist erfindungsgemäß zur Realisierung einer mehr als vollen Umdrehung von über 360° um die zugehörige Achse 4 des Schneckenrades 3 eingerichtet. Um dies im Detail zu realisieren und umzusetzen, taucht der zweiarmige Hebel 8 mit seinem einen Arm 8a in die zuvor bereits angesprochene Ausnehmung 6 der Nockenkontur 5 ein. Der andere Arm 8b des zweiarmigen Hebels 8 beaufschlagt demgegenüber und wunschgemäß das lediglich angedeutete Stellelement 10, und zwar mittelbar oder unmittelbar. Bei dem Stellelement 10 kann es sich um die zuvor bereits angesprochene Drehfalle, die Fensterscheibe, eine Kraftfahrzeugtür etc. handeln.

Ausgehend von der Grundstellung nach der Fig. 1A und dem Stellwinkel von 0° für die Nockenkontur 5 führt nun eine Drehbewegung des Schneckenrades 3 und damit der Nockenkontur 5 um die Achse 4 im Gegenuhrzeigersinn dazu, dass die Spiralkante 7 der Nockenkontur 5 gegen den Arm 8a des Hebels 8 fährt. Im gezeigten Beispielfall erstreckt sich die Nockenkontur 5 und damit die Spiralkante 7 in einer zum Schneckenrad 3 parallelen Ebene. Durch den zunehmenden Abstand der Spiralkante 7 von der Achse 4 des Schneckenrades 3 wird der Arm 8a des Hebels 8 zunehmend um die Achse 9 verschwenkt, und zwar im Uhrzeigersinn und erfährt dadurch das Stellelement 10 die gewünschte Beaufschlagung.

Dadurch, dass bei diesem Vorgang die Nockenkontur 5 eine mehr als volle Umdrehung von über 360° absolviert, kann insgesamt die vom Elektromotor 1 zur Verfügung gestellte Übersetzung erhöht werden, mit der im Endeffekt der Hebel 8 beaufschlagt wird. Um dennoch den Elektromotor 1 am Ende dieser Bewegung zielgenau abbremsen und stoppen zu können, ist zusätzlich ein flexibler Anschlag 11 realisiert, den man anhand der Rückansicht nach den Fig. 2A bis 2C nachvollziehen kann.

Tatsächlich ist der Anschlag 11 als mit dem Schneckenrad 3 wechselwirkendes Spannmittel 11 ausgebildet. Zu diesem Zweck ist das Spannmittel 11 einerseits an das Schneckenrad 3 und andererseits an einem ortsfesten Anschlag 12 festgelegt. Das Schneckenrad 3 verfügt außerdem über eine Führungskontur 13 für das Spannmittel 11. Bei der Führungskontur 13 handelt es sich im Ausführungsbeispiel um einen Ring bzw. eine Ringkontur, die die Achse 4 des Schneckenrades 3 beabstandet umgibt. Man erkennt, dass das Spannmittel 11 mit seinem einen Ende an der Führungskontur 13 festgelegt ist bzw. in die Führungskontur 13 eingreift, wohingegen das andere Ende des Spannmittels 11 an den ortsfesten Anschlag 12 angeschlossen ist.

Dabei ist die Auslegung insgesamt und ferner noch so getroffen, dass die Nockenkontur 5 auf der Frontseite bzw. Oberseite des Schneckenrades 3 angeordnet und platziert ist, auf welche man bei Betrachtung der Fig. 1A und 1B blickt. Demgegenüber findet sich die Führungskontur 13 an der Rückseite des Schneckenrades 3, wie anhand der Rückansicht nach den Fig. 2A bis 2C deutlich wird. Die Nockenkontur 5 und die Führungskontur 13 sind insgesamt einstückig mit dem Schneckenrad 3 als beispielsweise Spritzgussteil gefertigt. Dieses kann aus Kunststoff und/oder Metall hergestellt werden.

Die Fig. 2A bis 2C machen dann noch deutlich, dass das Spannmittel 11 bandförmig ausgebildet ist. Außerdem lässt das bandförmige Spannmittel 11 eine flexible Längenänderung von mehr als 20 %, vorzugsweise von 50 % und mehr zu. D. h., bei einer axialen Beaufschlagung des bandförmigen Spannmittels 11 ist dieses in der Lage, seine Länge um mehr als 20 % und vorzugsweise sogar um 50 % und mehr zu vergrößern und kann dennoch nach Beendigung der axialen Beaufschlagung flexibel und beschädigungsfrei in seinen Ausgangszustand zurückkehren. Dazu ist das Spannmittel 11 ganz oder teilweise aus einem elastischen Material hergestellt. Hierbei kann es sich um einen elastomeren Kunststoff, beispielsweise NR (Naturkautschuk) handeln. Grundsätzlich ist an dieser Stelle auch ein Textil oder sind Kombinationen denkbar.

Jedenfalls führt die in den Fig. 1A und 1B in der Frontansicht dargestellte Beaufschlagung des Hebels 8 mithilfe der im Gegenuhrzeigersinn bewegte Nockenkontur 5 dazu, dass die entsprechende Uhrzeigersinnbewegung des Schneckenrades 3 in der Rückansicht nach den Fig. 2A bis 2C nachvollzogen werden kann. Die Uhrzeigersinnbewegung korrespondiert nun dazu, dass sich das Spannmittel 11 hierbei umfangseitig an die ringförmige Führungskontur 13 anlegt und auf der Führungskontur 13 gleichsam aufgewickelt wird, wie man in der Abfolge der Fig. 2A bis 2C nachvollziehen kann. Das gilt grundsätzlich auch dann, wenn das Schneckenrad 3 eine Reversierbewegung im Gegenuhrzeigersinn absolviert.

Nicht dargestellt ist die weitere Möglichkeit, dass die Nockenkontur 5 nicht über eine in der Ebene orientierte Spiralkante 7 verfügt, sondern stattdessen mit einer wendelförmig verlaufenden Spiralkontur ausgerüstet ist. In diesem Fall kann der mit der Nockenkontur 5 ausgerüstete Arm 8a des Hebels 8 beispielsweise mit einer Rolle ausgerüstet sein, welche der wendelförmigen Spiralkontur der Nockenkontur 5 folgt. In diesem Fall absolviert der zweiarmige Hebel 8 keine Schwenkbewegung um seine Achse 9, sondern wird vielmehr um eine in der Zeichenebene liegende Achse aufwärts bewegt, sodass als Folge hiervon der andere Arm 8b eine Abwärtsbewegung vollführt, die wiederum auf das Stellelement 10 übertragen werden kann.

**Bezugszeichenliste**

| | |
|---|---|
| **1** | Elektromotor |
| **2** | Abtriebsschnecke |
| **3** | Antriebsrad / Schneckenrad |
| **4** | Achse |
| **5** | Nockenkontur |
| **6** | Ausnehmung (achsnah) |
| **7** | Spiralkante |
| **8** | zweiarmiger Hebel |
| **8a** | erster Arm |
| **8b** | zweiter Arm |
| **9** | (mittlere) Achse |
| **10** | Stellelement |
| **11** | flexibler Anschlag / Spannmittel |
| **12** | Anschlag (ortsfest) |
| **13** | Führungskontur |

## Patentansprüche

1. Elektromotorischer Antrieb für kraftfahrzeug-technische Anwendungen, mit einem Elektromotor (1), ferner mit einem mit dem Elektromotor (1) wechselwirkenden Antriebsrad (3), insbesondere Schneckenrad (3), mit Nockenkontur (5), und mit einem von der Nockenkontur (5) beaufschlagbaren Hebel (8), wobei die Nockenkontur (5) zur Beaufschlagung des Hebels (8) eine volle Umdrehung (360°) vollführt,
**dadurch gekennzeichnet, dass**
die Nockenkontur (5) zur Realisierung einer mehr als vollen Umdrehung (> 360°) eingerichtet ist, wobei die Nockenkontur (5) mit einem flexiblen Anschlag (11) ausgerüstet ist, wobei der Anschlag (11) als mit dem Antriebsrad (3), insbesondere Schneckenrad (3), wechselwirkendes Spannmittel (11) ausgebildet ist, wobei das Antriebsrad, insbesondere Schneckenrad (3), eine Führungskontur (13) für das Spannmittel (11) aufweist.

2. Antrieb nach Anspruch 1, **dadurch gekennzeichnet, dass** das Spannmittel (11) einerseits an das Antriebsrad (3), insbesondere Schneckenrad (3), und andererseits an einen ortsfesten Anschlag (12) festgelegt ist.

3. Antrieb nach Anspruch 1, **dadurch gekennzeichnet, dass** die Führungskontur (13) gegenüberliegend zur Nockenkontur (5) am Schneckenrad (3) vorgesehen ist.

4. Antrieb nach einem der Ansprüche 1 bis 3, **dadurch gekennzeichnet, dass** das Spannmittel (11) bandförmig ausgebildet ist und eine flexible Längenänderung von mehr als 20 %, vorzugsweise von 50 % und mehr, zulässt.

5. Antrieb nach einem der Ansprüche 1 bis 4, **dadurch gekennzeichnet, dass** das Spannmittel (11) ganz oder teilweise aus einem elastischen Material, beispielsweise einem Elastomer, einem Textil oder Kombinationen hergestellt ist.

6. Antrieb nach einem der Ansprüche 1 bis 5, **dadurch gekennzeichnet, dass** die Nockenkontur (5) eine vorzugsweise achsnahe Ausnehmung (6) für den Hebel (8) aufweist.

7. Antrieb nach einem der Ansprüche 1 bis 6, **dadurch gekennzeichnet, dass** die Nockenkontur (5) eine Spiralkante (7) aufweist, die mehr als eine volle Umdrehung um die Achse (4) beschreibt.

8. Kraftfahrzeug-Schloss, insbesondere Kraftfahrzeug-Türschloss, **gekennzeichnet durch** einen elektromotorischen Antrieb nach einem der Ansprüche 1 bis 7.

## Claims

1. Electromotive drive for motor vehicle applications, comprising an electric motor (1), further comprising a drive wheel (3), in particular a worm wheel (3), which interacts with the electric motor (1) and has a cam contour (5), and comprising a lever (8) which can be acted upon by the cam contour (5), the cam contour (5) completing a full revolution (360°) in order to act upon the lever (8),
**characterized in that**
the cam contour (5) is designed to complete more than a full revolution (> 360°), the cam contour (5) being equipped with a flexible stop (11), the stop (11) being designed as a tensioning means (11) which interacts with the drive wheel (3), in particular the worm wheel (3), the drive wheel, in particular the worm wheel (3), having a guide contour (13) for the tensioning means (11).

2. Drive according to claim 1, **characterized in that** the tensioning means (11) is fixed at one end to the drive wheel (3), in particular the worm wheel (3), and at the other end to a stationary stop (12).

3. Drive according to claim 1, **characterized in that** the guide contour (13) is provided opposite the cam contour (5) on the worm wheel (3).

4. Drive according to any of claims 1 to 3, **characterized in that** the tensioning means (11) is in the form of a band and allows a flexible length change of more than 20%, preferably of 50% and more.

5. Drive according to any of claims 1 to 4, **characterized in that** the tensioning means (11) is made entirely or partially of an elastic material, for example an elastomer, a textile or combinations.

6. Drive according to any of claims 1 to 5, **characterized in that** the cam contour (5) has a recess (6), preferably close to the axis, for the lever (8).

7. Drive according to any of claims 1 to 6, **characterized in that** the cam contour (5) has a spiral edge (7) which describes more than a full revolution about the axis (4).

8. Motor vehicle latch, in particular a motor vehicle door latch, **characterized by** an electromotive drive according to any of claims 1 to 7.

## Revendications

1. Entraînement par moteur électrique pour des applications dans le domaine technique de l'automobile, comportant un moteur électrique (1), comportant en outre une roue d'entraînement (3), en particulier une roue tangente (3), interagissant avec le moteur électrique (1), comportant un contour à cames (5), et comportant un levier (8) pouvant être sollicité par le contour à cames (5), dans lequel le contour à cames (5) effectue une rotation complète (360°) pour la sollicitation du levier (8),
**caractérisé en ce que**
le contour à cames (5) est conçu pour réaliser une rotation plus que complète (> 360°), dans lequel le contour à cames (5) est pourvu d'une butée (11) flexible, dans lequel la butée (11) est réalisée sous forme de moyen de serrage (11) interagissant avec la roue d'entraînement (3), en particulier la roue tangente (3), dans lequel la roue d'entraînement, en particulier la roue tangente (3), présente un contour de guidage (13) pour le moyen de serrage (11).

2. Entraînement selon la revendication 1, **caractérisé en ce que** le moyen de serrage (11) est fixé d'une part à la roue d'entraînement (3), en particulier à la roue tangente (3), et d'autre part à une butée fixe (12).

3. Entraînement selon la revendication 1, **caractérisé en ce que** le contour de guidage (13) est prévu en face du contour à cames (5) sur la roue tangente (3).

4. Entraînement selon l'une des revendications 1 à 3, **caractérisé en ce que** le moyen de serrage (11) est réalisé en forme de bande et permet une variation de longueur flexible de plus de 20 %, de préférence de 50 % et plus.

5. Entraînement selon l'une des revendications 1 à 4, **caractérisé en ce que** le moyen de tension (11) est entièrement ou partiellement fabriqué à partir d'un matériau élastique, par exemple un élastomère, un textile ou des combinaisons.

6. Entraînement selon l'une des revendications 1 à 5, **caractérisé en ce que** le contour à cames (5) présente un évidement (6), de préférence proche d'un axe, pour le levier (8).

7. Entraînement selon l'une des revendications 1 à 6, **caractérisé en ce que** le contour à cames (5) présente un bord hélicoïdal (7) qui définit plus d'une rotation complète autour de l'axe (4).

8. Serrure de véhicule automobile, en particulier serrure de portière de véhicule automobile, **caractérisée par** un entraînement par moteur électrique selon l'une des revendications 1 à 7.
